(19) Europäisches Patentamt
European Patent Office
Office européen des brevets

(11) EP 0 645 562 B1

(12) EUROPÄISCHE PATENTSCHRIFT

(45) Veröffentlichungstag und Bekanntmachung des Hinweises auf die Patenterteilung:
27.12.1996 Patentblatt 1996/52

(51) Int Cl.⁶: **F16K 1/44**

(21) Anmeldenummer: 94114540.1

(22) Anmeldetag: 15.09.1994

(54) **Doppelsitzventil**

Double seat valve

Robinet à double siège

(84) Benannte Vertragsstaaten:
AT BE CH DE FR GB IT LI NL

(30) Priorität: 25.09.1993 DE 4332764

(43) Veröffentlichungstag der Anmeldung:
29.03.1995 Patentblatt 1995/13

(73) Patentinhaber: KARL DUNGS GMBH & CO.
D-73660 Urbach (DE)

(72) Erfinder:
• Schwarz, Walter
D-73614 Schorndorf (DE)

• Neu, Kunibert, Dr.
D-73117 Wangen (DE)

(74) Vertreter: KOHLER SCHMID + PARTNER
Patentanwälte
Ruppmannstrasse 27
70565 Stuttgart (DE)

(56) Entgegenhaltungen:
DE-A- 3 146 590          DE-C- 532 590
US-A- 3 282 296

**Beschreibung**

Die Erfindung betrifft ein Doppelsitzventil, insbesondere für einen Gasdruckregler, mit einem oberen Ventilsitz mit einem lichten Innendurchmesser $d_{SO}$ der oberen Ventilöffnung, mit einem darunter angeordneten unteren Ventilsitz mit einem lichten Innendurchmesser $d_{SU}$ der unteren Ventilöffnung und mit einem Ventilkörper, der einen oberen und einen unteren Ventilteller aufweist, wobei an den beiden Ventiltellern jeweils ein elastomeres Dichtungsmittel vorgesehen ist und die Unterseiten der Dichtungsmittel in der geschlossenen Stellung des Doppelsitzventils auf dem oberen bzw. dem unteren Ventilsitz mit einer definierten Pressung aufliegen, die den Durchtritt des abzudichtenden Mediums verhindert, wobei der Außendurchmesser $d_{TO}$ des oberen Ventiltellers und der Außendurchmesser $d_{TU}$ des unteren Ventiltellers jeweils kleiner sind als der lichte Innendurchmesser $d_{SO}$ des oberen Ventilsitzes und wobei die elastomeren Dichtungsmittel sich in radialer Richtung weiter nach außen erstrecken als die beiden Ventilteller und einen oberen Außendurchmesser $d_{DO}$ bzw. einen unteren Außendurchmesser $d_{DU}$ aufweisen, der jeweils größer als der lichte Innendurchmesser $d_{SO}$ des oberen Ventilsitzes bzw. der lichte Innendurchmesser $d_{SU}$ des unteren Ventilsitzes ist, wobei der Außendurchmesser $d_{DU}$ des unteren Dichtungsmittels größer als der lichte Innendurchmesser $d_{SO}$ des oberen Ventilsitzes ist.

Ein derartiges Doppelsitzventil ist durch die DE-PS 532 590 bekanntgeworden.

Außerdem ist auch aus der DE-OS 31 46 590 ein Doppelsitzventil bekanntgeworden, das die Fig.3 der Zeichnung zeigt und bei dem der lichte Innendurchmesser $d'_{SO}$ des oberen Ventilsitzes kleiner ist als der Außendurchmesser $d'_{TO}$ des in Normaleinbaulage oberen Ventiltellers eines Ventilkörpers, aber größer als der Außendurchmesser $d'_{TU}$ des unteren Ventiltellers des Ventilkörpers. Somit kann bei einem einstückigen Ventilkörper der untere Ventilteller durch die Öffnung des oberen Ventilsitzes hindurch in seine Arbeitslage eingeführt werden. An den Unterseiten der Ventilteller ist zum Abdichten mit den Auflageflächen der Ventilsitze in der geschlossenen Stellung des Doppelsitzventiles ein elastomeres Dichtungsmittel vorgesehen, wobei der mittlere Außendurchmesser $d'_{DU}$ des unteren Dichtungsmittels kleiner als der Innendurchmesser $d'_{SO}$ des oberen Ventilsitzes ist, um ein axiales Hindurchführen des unteren Ventiltellers durch die obere Ventilöffnung zu ermöglichen.

Die Stellzeit eines Doppelsitzventils, also die Zeit, die erforderlich ist, um das Doppelsitzventil beispielsweise aus seiner völlig geöffneten in seine geschlossene Stellung zu bewegen, wird insbesondere durch das Gewicht des Ventilkörpers bestimmt. Bei dem Ventilkörper des aus der DE-OS 31 46 590 bekannten Doppelsitzventils ist eine Gewichts- bzw. Materialeinsparung beim Metall des Ventilkörpers jedoch nicht mehr möglich, da die Abmessungen des Ventilkörpers bereits durch die Abmessungen der Ventilsitze festgelegt sind. Nachteilig bei der bekannten Geometrie ist außerdem, daß sich die lichten Innendurchmesser $d'_{SO}$ und $d'_{SU}$ der Ventilsitze relativ stark unterscheiden müssen, wodurch bei anstehendem Mediendruck zwischen den beiden Ventiltellern die öffnende Kraft des oberen Ventiltellers größer ist als die schließende Kraft am unteren Ventilteller. Gerade bei einem Druckregler wird aber auf das Kräftegleichgewicht im Sinne einer Ausgewogenheit größter Wert gelegt. Bei ungleichen Flächen ändert sich proportional zum Mediendruck die Kraftdifferenz, was die Güte der Regelung sehr negativ beeinflußt. Dennoch sind bei dieser bekannten Anordnung die Innendurchmesser der Ventilsitze stark unterschiedlich, damit einerseits der untere Ventilteller zur Montage des Doppelsitzventils problemlos in axialer Richtung durch den oberen Ventilsitz hindurchgesteckt werden kann, wobei aber andererseits durch eine genügend große Differenz zwischen oberem und unterem Sitzdurchmesser oben und unten eine ausreichend große dichtende Auflagefläche zwischen dem jeweiligen Ventilteller und dem entsprechenden Ventilsitz gewährleistet ist.

Bei dem aus der eingangs zitierten DE-PS 532 590 bekannten Doppelsitzventil besteht der Ventilkörper aus zwei einzelnen beim Einbau mit Hilfe einer Ventilspindel zu verschraubenden Ventiltellern. Die zum Abdichten des Doppelsitzventiles erforderliche radiale Ausdehnung der Dichtungsringe wird erst durch ihr Zusammenpressen zwischen zwei Ventiltellerhälften bewirkt. Jedoch liegen bei diesem Doppelsitzventil in der geschlossenen Ventilstellung die Dichtungsringe entweder innerhalb der Ventilsitze oder auf den Ventilsitzen derart auf, daß insbesondere nach einem längeren Verweilen in der geschlossenen Stellung zum Öffnen des Doppelsitzventils nicht unerhebliche externe Losreiß-Kräfte erforderlich sind.

Der Erfindung liegt demgegenüber die Aufgabe zugrunde, ein Doppelsitzventil der eingangs genannten Art dahingehend weiterzubilden, daß der Ventilkörper leicht in seine Arbeitsstellung gebracht werden kann und daß zur Überwindung der Haftkräfte zwischen den Dichtungselementen und den Ventilsitzen beim Öffnen des Ventils nach einer längeren Zeit im geschlossenen Zustand keine oder nur geringe externe Kräfte eingesetzt werden müssen.

Diese Aufgabe wird erfindungsgemäß dadurch gelöst, daß der Ventilkörper einstückig ist, daß der Außendurchmesser $d_{DO}$ des oberen Dichtungsmittels größer als das 1,1-fache des Außendurchmessers $d_{TO}$ des oberen Ventiltellers ist und der Außendurchmesser $d_{DU}$ des unteren Dichtungsmittels größer als das 1,1-fache des Außendurchmessers $d_{TU}$ des unteren Ventiltellers ist und daß die elastomeren Dichtungsmittel an der Unterseite der beiden Ventilteller angeordnet sind.

Bei dem erfindungsgemäßen Doppelsitzventil erlaubt die konstruktive Gestaltung des unteren Dichtungsmittels das Durchstecken des unteren Ventiltellers durch den oberen Ventilsitzinnendurchmesser, obwohl beide Ventilsitzflächen gleich groß sind. Dadurch wird bei einer Druckbeaufschlagung entweder im Ventilinnenraum oder gleichzeitig von oben und unten im Ventilaußenraum das Auftreten von resultierenden öffnenden bzw. schließenden Kräfte vermieden, was für Regler besonders vorteilhaft ist. Außerdem vermeiden die Geometrie bzw. Geometrieverhältnisse von Dichtungsmittel und Ventilsitz beim Öffnen des Doppelsitzventiles das Haften zwischen den Dichtungsmitteln und den metallenen Auflageflächen der Ventilsitze, ohne daß dazu eine Zusatzbehandlung der betreffenden Dichtungsoberflächen erforderlich wäre. Denn die Anpreßkraft der auf den Ventilsitzen aufliegenden Dichtungsmittel führt zu einer insbesondere radialen Deformation bzw. zu einem Biegemoment der Dichtungsmittel. Beim Öffnen des Doppelsitzventiles führt dies zu einer radialen Mikrobewegung der Dichtungsmittel gegenüber der metallenen Auflagefläche der Ventilsitze, so daß die wirkenden Haftkräfte abgebaut werden und dazu keine axialen zusätzlichen Kraftkomponenten erforderlich sind.

Dagegen wirkt bei bekannten Dichtungsmitteln, insbesondere bei dem oberen Ventilteller eines Doppelsitzventils gemäß der DE-PS 532 590 eine axial auf den Ventilkörper wirkende Dichtkraft ebenfalls axial zwischen Ventilsitz und zugehörigem Dichtungsmittel. Nach längerer Geschlossenstellung des Ventils ist aufgrund des Haftens zwischen den elastomeren Dichtungsmitteln und den Dichtungsflächen aus Metall zum Öffnen des Ventils eine Losreißkraft erforderlich. Da diese Losreißkraft ein Vielfaches der vorgespannten Sollwertfederkraft eines Reglers betragen kann und zum Öffnen keine zusätzliche Hilfsenergie zur Verfügung steht, kann das Doppelsitzventil nicht mehr geöffnet werden. In einer bevorzugten Ausführungsform der Erfindung sind der Außendurchmesser $d_{DO}$ des oberen Dichtungsmittels daher größer als das 1,5-fache des Außendurchmessers $d_{TO}$ des oberen Ventiltellers und der Außendurchmesser $d_{DU}$ des unteren Dichtungsmittels größer als das 1,5-fache des Außendurchmessers $d_{TU}$ des unteren Ventiltellers. In dieser erfindungsgemäßen Ausführungsform führt eine auf den Ventilkörper wirkende axiale Kraft zu einer noch stärkeren Verbiegung und radialen Verlagerung der Dichtungsmittel nach innen. Diese in der geschlossenen Stellung des Doppelsitzventils auf die Dichtungsmittel wirkenden Deformationen bzw. Biegemomente führen beim Öffnen des Doppelsitzventiles aufgrund radialer Mikrobewegungen der Dichtungsmittel relativ zu ihren Auflegeflächen zu einer Verringerung der Haftkräfte und können in eine axiale Kraft nach oben umgesetzt werden. Die Haftkräfte zwischen den Dichtungsmitteln und den Dichtungsflächen können so deutlich verringert werden.

Eine besonders bevorzugte Ausführungsform der Erfindung kennzeichnet sich dadurch, daß in der geschlossenen Stellung des Doppelsitzventils die wirksamen Abdichtungsflächen des oberen und unteren Ventiltellers gleich sind. Dann heben sich die aufgrund eines im Ventilraum herrschenden Drucks auf die wirksamen Abdichtungsflächen der beiden Ventilteller wirkenden axialen Kräfte gerade auf. In diesem Fall ist nur eine geringe zusätzliche Kraft erforderlich, um das Ventil als Durchflußbegrenzer in seiner geschlossenen Stellung zu halten. Wird das Doppelsitzventil insbesondere als empfindliches Stellglied eines Reglers verwendet, so ist gerade dieser exakte Kraftausgleich gefordert.

Je nach Einsatzgebiet kann eine linienförmige Dichtungsfläche dadurch, daß der obere und/oder der untere Ventilsitz schneidenförmig mit Dichtkanten ausgebildet ist, oder eine flächenhafte Dichtung dadurch, daß der obere und/oder der untere Ventilsitz mit einer flachen Dichtfläche ausgebildet ist, realisiert werden. Werden die Dichtflächen der beiden Ventilsitze und die Dichtungsmittel jeweils gleich ausgebildet, so ergibt sich eine nahezu gleichmäßige Kraftverteilung der beispielsweise durch Federkraft eingeleiteten Dichtkraft auf beide Ventilsitze.

In einer weiteren bevorzugten Ausführungsform der Erfindung, weisen die Dichtungsmittel im Bereich der Dichtflächen jeweils einen nach unten ragenden umlaufenden Wulst auf. Die Verformungsenergie der beiden Dichtwülste kann beim Öffnen des Ventils vorteilhafterweise zur Überwindung der Haftkräfte zwischen Ventilsitz und Dichtungsmittel genutzt werden.

Bei einer besonders bevorzugten Ausführungsform der Erfindung ist der lichte Innendurchmesser $d_{SO}$ des oberen Ventilsitzes gleich dem lichten Innendurchmesser $d_{SU}$ des unteren Ventilsitzes. Die Ventilsitze können so in einem einzigen Arbeitsschritt hergestellt werden und der Ventilkörper kann über jede der beiden Ventilöffnungen in seine Arbeitslage eingeführt werden. Wird er von unten eingeführt, so wird der obere Ventilteller durch beide Ventilöffnungen, der untere Ventilteller nur durch die untere hindurchgeführt.

Bevorzugt sind beide Seiten der Ventilsitze mit einer Dichtkante bzw. einer Dichtfläche ausgebildet, so daß sich der Ventilkörper auch in einer zweiten, um 180° gedrehten Arbeitsstellung einsetzen läßt.

Vorteilhafterweise sind die Umfangsflächen der Dichtungsmittel kegelförmig ausgebildet, um das Hindurchführen bzw. Hindurchdrücken der Dichtungsmittel durch die Ventilöffnung bzw. durch beide Ventilöffnungen zu erleichtern.

Um die zwischen dem Ventilsitz und dem Dichtungsmittel wirkenden Haftkräfte gering zu halten, wird erfindungsgemäß vorgeschlagen, zwischen dem Ventilsitz und den Dichtungsmitteln eine Trennschicht auszubilden. Diese Trennschicht kann durch eine Oberflächenbehandlung der Dichtkanten oder -flächen ausgebildet sein oder dadurch, daß ein Gleitmittel, vorzugsweise Graphit- oder Talkumpuder, auf die Dichtkanten oder -flächen und/oder auf die Dichtungsmittel aufgebracht wird.

Bevorzugt sind die elastomeren Dichtungsmittel an die beiden Ventilteller angeklebt oder anvulkanisiert, um eine dauerhafte Verbindung zu gewährleisten.

Weitere Vorteile ergeben sich aus der Beschreibung und der beigefügten Zeichnung. Die erwähnten Ausführungsformen sind nicht als abschließende Aufzählung zu verstehen, sondern haben vielmehr beispielhaften Charakter.

In der Zeichnung sind zwei Ausführungsformen der Erfindung dargestellt. Es zeigt:

Fig. 1     einen axialen Längsschnitt einer ersten erfindungsgemäßen Ausführungsform;

Fig. 2     eine axiale Längsschnittshälfte einer zweiten Ausführungsform der Erfindung; und

Fig. 3     eine axiale Längsschnittshälfte eines bekannten Doppelsitzventiles.

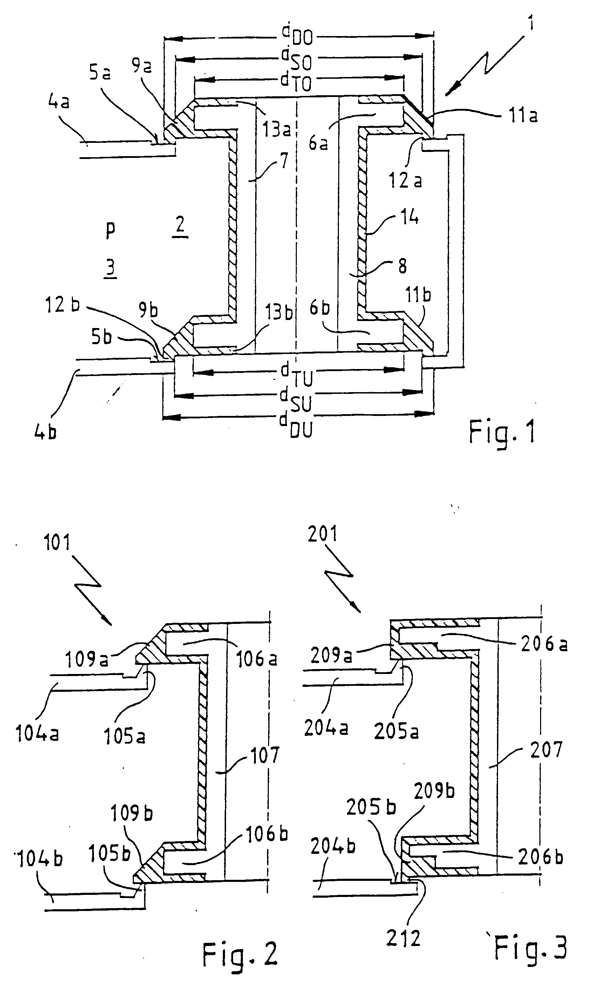

In Figur 1 ist mit 1 ein Doppelsitzventil bezeichnet, das sich in seiner geschlossenen Stellung befindet. Das Doppelsitzventil 1 weist eine Ventilkammer 2 mit einem Ventileingang 3 und mit zwei Ventilsitzen 4a, 4b auf. Der lichte Innendurchmesser $d_{SO}$ des oberen Ventilsitzes 4a bildet die obere Ventilöffnung, der lichte Innendurchmesser $d_{SU}$ des unteren Ventilsitzes 4b die untere Ventilöffnung des Doppelsitzventiles 1. Die beiden Ventilsitze 4a, 4b bzw. die beiden Ventilöffnungen verlaufen parallel zueinander und sind auf ihrer Oberseite derart gestuft, daß jeweils eine flache oder leicht geneigte Kegelfläche als Dichtfläche 5a, 5b ausgebildet ist. In den in den Figuren 1 und 2 gezeigten Ausführungsformen der Erfindung entspricht der lichte Innendurchmesser $d_{SO}$ des oberen Ventilsitzes 4a dem lichten Innendurchmesser $d_{SU}$ des unteren Ventilsitzes 4b.

Mit den beiden Ventilsitzen 4a, 4b wirken zwei Ventilteller 6a, 6b eines Ventilkörpers 7 zusammen. Der Ventilkörper 7 ist einstückig und rotationssymmetrisch ausgebildet. Die beiden Ventilteller 6a, 6b sind an den beiden Stirnseiten des Ventilkörpers 7 ausgebildet, dessen mittlerer axialer Abschnitt 8 gegenüber den beiden Ventiltellern 6a, 6b nach innen zurückgestuft ist. Der Außendurchmesser $d_{TO}$ des oberen Ventiltellers 6a ist gleich dem Außendurchmesser $d_{TU}$ des unteren Ventiltellers 6b, wohingegen dieser Außendurchmesser $d_{TO}$, $d_{TU}$ der Ventilteller 6a, 6b kleiner als der lichte Innendurchmesser $d_{SO}$, $d_{SU}$ der Ventilsitze 4a, 4b ist.

Von den radialen Umfangsflächen und von den Unterseiten der Ventilteller 6a, 6b erstreckt sich in radialer Richtung nach außen jeweils ein elastomeres Dichtungsmittel 9a, 9b. Der Außendurchmesser $d_{DO}$ des oberen Dichtungsmittels 9a ist größer als der lichte Innendurchmesser $d_{SO}$ des oberen Ventilsitzes 4a und der Außendurchmesser $d_{DU}$ des unteren Dichtungsmittels 9b größer als der lichte Innendurchmesser $d_{SU}$ des unteren Ventilsitzes 4b. Auf ihrem oberen axialen Abschnitt weisen die Dichtungsmittel 9a, 9b jeweils eine kegelförmige, sich nach oben verjüngende Dichtungsfläche 11a, 11b auf, während sie im Bereich der Dichtflächen 5a, 5b jeweils einen nach unten ragenden umlaufenden Dichtungswulst 12a, 12b aufweisen. In der geschlossenen Stellung des Doppelsitzventiles 1 wirken die Dichtungswulste 12a, 12b mit den Dichtflächen 5a, 5b der Ventilsitze 4a, 4b zusammen. Auch auf dem mittleren Abschnitt 8 des Ventilkörpers 7 und auf einem Teil der Stirnflächen 13a, 13b kann der Ventilkörper mit einem Dichtungsmittel 14 versehen sein.

Das in Figur 2 mit 101 bezeichnete Doppelsitzventil unterscheidet sich von dem Doppelsitzventil 1 der Figur 1 dadurch, daß die Ventilsitze 104a, 104b jeweils mit einer nach oben weisenden schneidenförmigen Dichtungskante 105a, 105b ausgebildet sind und daß die sich radial nach außen erstreckenden Dichtungsmittel 109a, 109b keinen Dichtungswulst, sondern eine flache Dichtfläche aufweisen.

Die Abmessungen der in den Fign. 1 und 2 gezeigten Ausführungsformen lassen sich in der folgenden Ungleichungen zusammenfassen:

$$d_{D0} = d_{DU} > d_{SO} = d_{SU} > d_{TO} = d_{TU}.$$

Dabei kann der Durchmesser $d_{DU}$ der unteren Dichtungsmittel 9b, 109b bis um denjenigen Betrag größer als der lichte Innendurchmesser $d_{SO}$ des oberen Ventilsitzes 4a, 104a gewählt werden, um den sich das Dichtungsmittel 9b, 109b aufgrund seiner Elastizität in radialer Richtung zusammenpressen oder zur Seite biegen läßt.

Beim Einbau des Ventilkörpers 7, 107 des Doppelsitzventils 1, 101 wird der untere Ventilteller 4b, 104b, vorzugsweise schräg unter einem geeigneten Anstellwinkel, an die obere Ventilöffnung angesetzt und unter Zusammenpressen und Umbiegen der unteren Dichtungsmittel 9b, 109b durch die obere Ventilöffnung hindurchgewunden.

Um die Unterschiede und Vorteile der erfindungsgemäßen Ausführungsformen darzustellen, wird zunächst das in Fig. 3 gezeigte herkömmliche Doppelsitzventil beschrieben. Zur Beschreibung der Fig. 3 werden im folgenden die in Fig. 1 definierten und durch einen nachgefügten Strich ergänzten Durchmesserbezeichnungen verwendet. Bei dem Doppelsitzventil sind der obere Ventilsitz 204a mit einer schneidenförmigen Dichtungskante 205a und der untere Ventilsitz 204b mit einer ebenen Dichtungsfläche 205b ausgebildet. Der lichte Innendurchmesser $d'_{SO}$ ist größer als der lichte Innendurchmesser $d'_{SU}$ des unteren Ventilsitzes 204b. Der Außendurchmesser $d'_{TO}$ des oberen Ventiltellers 206a des Ventilkörpers 207 ist größer als der lichte Innendurchmesser $d'_{SO}$ des oberen Ventilsitzes 204a, der seinerseits größer als der Außendurchmesser $d'_{TU}$ des unteren Ventiltellers 206b ist. Von der Unterseite der Ventilteller 206a, 206b erstrecken sich elastomere Dichtungsmittel 209a, 209b nach unten, wobei das untere Dichtungsmittel 209b mit einem nach unten ragenden Dichtungswulst 212 versehen ist, der mit der Dichtungsfläche 205b des unteren Ventilsitzes 204b zusammenwirkt.

Der untere Ventilteller 206b des herkömmlichen Ventilkörpers 207 wird durch die Öffnung des oberen Ventilsitzes 204a hindurchgeführt, wobei der mittlere Außendurchmesser $d'_{DU}$ des unteren Dichtungsmittels 209b kleiner als der lichte Innendurchmesser $d_{SO}$ des oberen Ventilsitzes 204a gewählt ist, um den unteren Ventilteller 206b zusammen mit dem Dichtungsmittel 209b durch die obere Ventilöffnung hindurchführen zu können.

Herrscht in der geschlossenen Stellung des bekannten Doppelsitzventiles 201 in der Ventilkammer 202 ein Druck p eines Fluids, so wirkt auf die Dichtfläche des oberen Ventiltellers 206a eine Kraft axial nach oben und auf die Dichtfläche des unteren Ventiltellers 206b eine Kraft axial nach unten. Für viele Anwendungen wird gefordert, daß die resultierende, auf den Ventilkörper 7 wirkende axiale Kraft verschwindet. Dazu muß der Innendurchmesser $d'_{SO}$ des oberen Ventilsitzes 204a gleich dem mittleren Außendurchmesser $d'_{DU}$ des unteren Dichtungsmittels 209b sein. Dies ist bei dem bekannten Doppelsitzventil 201 jedoch nicht exakt möglich. Vielmehr ergibt sich dann in der geschlossenen Stellung des Doppelsitzventils eine nicht mehr vernachlässigbare axiale Kraftkomponente nach oben, die der Schließkraft, beispielsweise einer Schließfeder, und somit der Dichtwirkung des Doppelsitzventils entgegenwirkt. Um dennoch einen Kraftausgleich zu erzielen, wird bei dem oberen Ventilsitz 204a eine schneidenförmige Dichtungskante 205a, die zu einer sehr kleinen Verformung des Dichtungsmittels 209a führt, und bei dem unteren Ventilsitz 204b eine Dichtfläche 205b verwendet, die zu einer größeren Verformung führt, so daß dennoch eine gleichmäßige Aufteilung der Dichtkraft in der geschlossenen Stellung des Doppelsitzventils erreicht wird. Dies ist jedoch nur über sehr kleine Toleranzfelder möglich.

Nach einer längeren Geschlossenstellung des Ventils aufgrund des Haftens zwischen den elastomeren Dichtungsmitteln und den Dichtungsflächen aus Metall ist zum Öffnen des Ventils eine Losreißkraft erforderlich, die beispielsweise bei einer Ventilreglerkombination ein Vielfaches der vorgespannten, minimalen Sollwertfederkraft ist, so daß der Regler nicht mehr öffnet. Außer der Sollwertfederkraft zum Öffnen steht aber keine zusätzliche Hilfsenergie zur Verfügung, wenn schneidenförmige Ventilsitze verwendet werden. Bei dem Doppelsitzventil 201 gemäß dem Stand der Technik führt eine auf den Ventilkörper 207 wirkende axiale Schließkraft zu einer ebenfalls nur axial wirkenden Kraftkomponente zwischen den Dichtungsmitteln und ihren zugehörigen Dichtungsflächen, wodurch die maximal mögliche Haftkraft zwischen den Dichtungsmitteln und den Dichtflächen wirkt.

Im Gegensatz dazu kann bei den erfindungsgemäßen Ausführungsformen der Figuren 1 und 2 ein exakter Kraftausgleich erzielt werden, wenn die Dichtfläche des oberen Ventiltellers 6a, 106a, die durch den lichten Innendurchmesser $d_{SO}$ des oberen Ventilsitzes 4a, 104a definiert ist, exakt gleich der Dichtfläche des unteren Ventiltellers 6b, 106b gewählt wird, die durch den Durchmesser $d_{DU}$ des unteren Dichtungsmittels 9b, 109b definiert ist.

Da sich die Außendurchmesser $d_{DO}$, $d_{DU}$ der Dichtungsmittel 9a, 9b, 109a, 109b radial nach außen über mindestens das 1,1-fache der Außendurchmesser $d_{TO}$, $d_{TU}$ der Ventilsitze 4a, 4b, 104a, 104b erstrecken, führt eine axial auf den Ventilkörper 7, 107 wirkende Kraft dazu, daß neben einer axialen Komponente auch eine radiale Deformation bzw. ein Biegemoment auf die Dichtungsmittel 9, 109 wirkt. Dadurch wird zum einen die zwischen den Dichtungsmitteln 9, 109 und den Dichtungsflächen 5, 105 wirkende Haftkraft nicht nur verringert, sondern beim Öffnen des Ventils wird das Biegemoment auch in eine axiale Öffnungskraft umgesetzt. Denn die radiale Deformation bzw. das Biegemoment der Dichtungsmittel erzeugt beim Öffnen des Doppelsitzventils radiale Mikrobewegungen der Dichtungsmittel 9, 109 auf den metallenen Auflageflächen 5, 105. Die Gefahr des Haftens zwischen den Dichtungsmitteln und den Dichtungsflächen wird deutlich herabgesetzt. Das Biegemoment führt zur Verformung des Elastomers, die beim Entlasten zu einer Rückverformung mit Gleitbewegungen zwischen Elastomer und Metall(Dicht)fläche führt. Diese Relativbewegung überwindet die Haftkräfte, so daß externe Kräfte zur Überwindung der Haftkräfte nicht mehr erforderlich sind.

Bei einem Doppelsitzventil 1 ist der Ventilkörper 7, 107 einstückig, der Außendurchmesser $d_{DO}$ des oberen Dichtungsmittels 9a größer als das 1,1-fache des Außendurchmessers $d_{TO}$ des oberen Ventiltellers 6a und der Außendurchmesser $d_{DU}$ des unteren Dichtungsmittels 9b größer als das 1,1-fache des Außendurchmessers $d_{TU}$ des unteren Ventiltellers 6b und sind die elastomeren Dichtungsmittel 9a, 9b an der Unterseite der beiden Ventilteller 6a, 6b angeordnet. Beim Öffnen des Doppelsitzventils führt die radiale Deformation bzw. das Biegemoment der auf den Ventilsitzen aufliegenden Dichtungsmittel 9 zu radialen Mikrobewegungen, so daß dem Öffnen entgegenwirkende Haftkräfte abgebaut werden.

**Patentansprüche**

1. Doppelsitzventil, insbesondere für einen Gasdruckregler, mit einem oberen Ventilsitz (4a; 104a) mit einem lichten Innendurchmesser $d_{SO}$ der oberen Ventilöffnung, mit einem darunter angeordneten unteren Ventilsitz (4b; 104b) mit einem lichten Innendurchmesser $d_{SU}$ der unteren Ventilöffnung und mit einem Ventilkörper (7; 107), der einen oberen und einen unteren Ventilteller (6a, 6b; 106a, 106b) aufweist, wobei an den beiden Ventiltellern (6a, 6b; 106a, 106b) jeweils ein elastomeres Dichtungsmittel (9a, 9b; 109a, 109b) vorgesehen ist und die Unterseiten der Dichtungsmittel (9a, 9b; 109a, 109b) in der geschlossenen Stellung des Doppelsitzventils (1; 101) auf dem oberen bzw. dem unteren Ventilsitz (4a, 104a; 4b, 104b) mit einer definierten Pressung aufliegen, die den Durchtritt des abzudichtenden Mediums verhindert, wobei der Außendurchmesser $d_{TO}$ des oberen Ventiltellers (6a; 106a) und der Außendurchmesser $d_{TU}$ des unteren Ventiltellers (6b; 106b) jeweils kleiner sind als der lichte Innendurchmesser $d_{SO}$ des oberen Ventilsitzes (4a; 104a) und wobei die elastomeren Dichtungsmittel (9a, 9b; 109a, 109b) sich in radialer Richtung weiter nach außen erstrecken als die beiden Ventilteller (6a, 6b; 106a, 106b) und einen oberen Außendurchmesser $d_{DO}$ bzw. einen unteren Außendurchmesser $d_{DU}$ aufweisen, der jeweils größer als der lichte Innendurchmesser $d_{SO}$ des oberen Ventilsitzes (4a; 104a) bzw. der lichte Innendurchmesser $d_{SU}$ des unteren Ventilsitzes (4b; 104b) ist, wobei der Außendurchmesser $d_{DU}$ des unteren Dichtungsmittels (9b; 109b) größer als der lichte Innendurchmesser $d_{SO}$ des oberen Ventilsitzes (4a; 104a) ist,
dadurch gekennzeichnet,
daß der Ventilkörper (7; 107) einstückig ist, daß der Außendurchmesser $d_{DO}$ des oberen Dichtungsmittels (9a; 109a) größer als das 1,1-fache des Außendurchmessers $d_{TO}$ des oberen Ventiltellers (6a; 106a) ist und der Außendurchmesser $d_{DU}$ des unteren Dichtungsmittels (9b; 109b) größer als das 1,1-fache des Außendurchmessers $d_{TU}$ des unteren Ventiltellers (6b; 106b) ist und daß die elastomeren Dichtungsmittel (9a, 9b; 109a, 109b) an der Unterseite der beiden Ventilteller (6a, 6b; 106a, 106b) angeordnet sind.

2. Doppelsitzventil nach Anspruch 1, dadurch gekennzeichnet, daß der Außendurchmesser $d_{DO}$ des oberen Dichtungsmittels (9a; 109a) größer oder gleich dem 1,5-fachen des Außendurchmessers $d_{TO}$ des oberen Ventiltellers (6a; 106a) ist und daß der Außendurchmesser $d_{DU}$ des unteren Dichtungsmittels (9b; 109b) größer oder gleich dem 1,5-fachen des Außendurchmessers $d_{TU}$ des unteren Ventiltellers (6b; 106b) ist.

3. Doppelsitzventil nach Anspruch 1 oder 2, dadurch gekennzeichnet, daß in geschlossener Stellung des Doppelsitzventils (1; 101) die wirksamen Abdichtungsflächen des oberen (6a; 106a) und unteren Ventiltellers (6b; 106b) gleich sind.

4. Doppelsitzventil nach einem der vorangehenden Ansprüche, dadurch gekennzeichnet, daß der obere und/oder der untere Ventilsitz (4a, 4b; 104a, 104b) schneidenförmig mit Dichtkanten (105a, 105b) ausgebildet ist.

5. Doppelsitzventil nach einem der vorangehenden Ansprüche, dadurch gekennzeichnet, daß der obere und/oder der untere Ventilsitz (4a, 4b; 104a, 104b) mit einer flachen Dichtfläche (5a, 5b) ausgebildet ist.

6. Doppelsitzventil nach Anspruch 5, dadurch gekennzeichnet, daß die Dichtungsmittel (9a, 9b) im Bereich der Dichtflächen (5a, 5b) jeweils einen nach unten ragenden umlaufenden Wulst (12a, 12b) aufweisen.

7. Doppelsitzventil nach einem der vorangehenden Ansprüche, dadurch gekennzeichnet, daß der lichte Innendurchmesser $d_{SO}$ des oberen Ventilsitzes (4a; 104a) gleich dem lichten Innendurchmesser $d_{SU}$ des unteren Ventilsitzes (4b; 104b) ist.

8. Doppelsitzventil nach Anspruch 7, dadurch gekennzeichnet, daß beide Seiten der Ventilsitze (4; 104) mit einer Dichtkante (105a, 105b) und/oder einer Dichtfläche (5a, 5b) ausgebildet sind.

9. Doppelsitzventil nach einem der vorangehenden Ansprüche, dadurch gekennzeichnet, daß die Umfangsflächen der Dichtungsmittel (9a, 9b; 109a, 109b) kegelförmig (11a, 11b; 111a, 111b) verlaufen.

10. Doppelsitzventil nach einem der vorangehenden Ansprüche, dadurch gekennzeichnet, daß zwischen dem Ventilsitz (4a, 4b; 104a, 104b) und den Dichtungsmitteln (9a, 9b; 109a, 109b) eine Trennschicht ausgebildet ist.

11. Doppelsitzventil nach Anspruch 10, dadurch gekennzeichnet, daß die Trennschicht durch eine Oberflächenbehandlung der Dichtkanten (105a, 105b) oder -flächen (5a, 5b) ausgebildet ist.

12. Doppelsitzventil nach einem der vorhergehenden Ansprüche, dadurch gekennzeichnet, daß die elastomeren Dichtungsmittel (9a, 9b; 109a, 109b) an die beiden Ventilteller (6a, 6b; 106a, 106b) angeklebt oder anvulkanisiert sind.

**Claims**

1. Double seat valve, in particular for a gas pressure regulator, having an upper valve seat (4a; 104a) with an inner clearance diameter $d_{SO}$ of the upper valve opening, with a lower valve seat (4b; 104B) arranged therebelow having an inner clearance diameter $d_{SU}$ of the lower valve opening and with a valve body (7; 107) having an upper and a lower valve disc (6a, 6b; 106a, 106b), wherein an elastomeric sealing means (91, 9b; 109a, 109b) is disposed on each of the two valve discs (6a, 6b; 106a, 106b) and the lower sides of the sealing means (9a, 9b; 109a, 109b) seat with a defined pressure on the upper or on the lower valve seat (4a, 104a; 4b, 104b) respectively in the closed position of the double seat valve (1; 101) to prevent passage of the medium being sealed, wherein the outer diameter $d_{TO}$ of the upper valve disc (6a; 106a) and the outer diameter $d_{TU}$ of the lower valve disc (6b; 106b) are each smaller than the inner clearance diameter $d_{SO}$ of the upper valve seat (4a; 104a) and wherein the elastomeric sealing means (9a, 9b; 109a, 109b) extend outwardly in the radial direction beyond the two valve discs (6a, 6b; 106a, 106b) and have an upper outer diameter $d_{DO}$ or a lower outer diameter $d_{DU}$ respectively which are each larger than the inner clearance diameter $d_{SO}$ of the upper valve seat (4a; 104a) and the inner clearance diameter $d_{SU}$ of the lower valve seat (4b; 104b) respectively, wherein the outer diameter $d_{DU}$ of the lower sealing means (9b; 109b) is larger than the inner clearance diameter $d_{SO}$ of the upper valve seat (4a; 104a), characterized in that the valve body (7; 107) is made from a single piece, that the outer diameter $d_{DO}$ of the upper sealing means (9a; 109a) is larger than 1.1 times the outer diameter $d_{TO}$ of the upper valve disc (6a; 106a) and the outer diameter $d_{DU}$ of the lower sealing means (9b; 109b) is larger than 1.1 times the outer diameter $d_{TU}$ of the lower valve disc (6b; 106b) and the elastomeric sealing means (9a, 9b; 109a, 109b) is disposed on the lower side of both valve discs (6a, 6b; 106a, 106b).

2. Double seat valve according to claim 1, characterized in that the outer diameter $d_{DO}$ of the upper sealing means (9a; 109a) is larger or equal to 1.5 times the outer diameter $d_{TO}$ of the upper valve disc (6a; 106a) and the outer diameter $d_{DU}$ of the lower sealing means (9b; 109b) is larger or equal to 1.5 times the outer diameter $d_{TU}$ of the lower valve disc (6b; 106b).

3. Double seat valve according to claim 1 or 2, characterized in that the active sealing surface of the upper (6a; 106a) and lower (6b; 106b) valve discs in the closed position of the double seat valve (1; 101) are equal.

4. Double seat valve according to one of the preceding claims, characterized in that the upper and/or lower valve seats (4a, 4b; 104a, 104b) have knife-shaped sealing edges (105a, 105b).

5. Double seat valve according to one of the preceding claims, characterized in that the upper and/or the lower valve seats (4a, 4b; 104a, 104b) have a flat sealing surface (5a, 5b).

6. Double seat valve according to claim 5, characterized in that the sealing means (9a, 9b) each have a downwardly projecting peripheral bead (12a, 12b) in the vicinity of the sealing surface (5a, 5b).

7. Double seat valve according to one of the preceding claims, characterized in that the inner clearance diameter $d_{SO}$ of the upper valve seat (4a; 104a) is equal to the inner clearance diameter $d_{SU}$ of the lower valve seat (4b; 104b).

8. Double seat valve according to claim 7, characterized in that the two sides of the valve seat (4; 104) have a sealing edge (105a, 105b) and/or a sealing surface (5a, 5b).

9. Double seat valve according to one of the preceding claims, characterized in that the peripheral surfaces of the sealing means (9a, 9b; 109a, 109b) are conical in shape (11a, 11b; 111a, 111b).

10. Double seat valve according to one of the preceding claims, characterized in that a separating layer is formed between the valve seat (4a, 4b; 104a, 104b) and the sealing means (9a, 9b; 109a, 109b).

11. Double seat valve according to claim 10, characterized in that the separating layer is formed by a surface treatment of the sealing edge (105a, 105b) or surfaces (5a, 5b).

12. Double seat valve according to one of the preceding claims, characterized in that the elastomeric sealing means (9a, 9b; 109a, 109b) is glued or vulcanized onto both valve discs (6a, 6b; 106a, 106b).

**Revendications**

1. Soupape à double siège, en particulier pour un régulateur de pression de gaz, comprenant un siège de soupape supérieur (4a ; 104a) avec un diamètre intérieur libre $d_{SO}$ pour l'ouverture de soupape supérieur, comprenant un siège de soupape inférieur (4b ; 104b) agencé au-dessous de celui-ci avec un diamètre intérieur libre $d_{SU}$ pour l'ouverture de soupape inférieure, et comprenant un corps de soupape (7 ; 107) qui comporte un opercule de soupape supérieur et un opercule de soupape inférieur (6a, 6b ; 106a ; 106b), et il est prévu un organe d'étanchéité en élastomère (9a, 9b ; 109a, 109b) au niveau des deux opercules respectifs (6a, 6b ; 106a, 106b), et dans la position fermée de la soupape à double siège (1 ; 101) les faces inférieures des organes d'étanchéité (9a, 9b ; 109a, 109b) s'appliquent sur le siège de soupape supérieur ou le siège de soupape inférieur (4a, 104a ; 4b, 104b) avec une pression définie qui empêche le passage du fluide à étancher, dans laquelle le diamètre extérieur $d_{TO}$

de l'opercule supérieur (6a ; 106a) et le diamètre extérieur $d_{TU}$ de l'opercule inférieur (6b ; 106b) sont respectivement inférieurs au diamètre intérieur libre $d_{SO}$ du siège de soupape supérieur (4a ; 104a) et les organes d'étanchéité en élastomère (9a, 9b ; 109a, 109b) s'étendent en direction radiale plus loin que les deux opercules (6a, 6b ; 106a, 106b) et présentent un diamètre extérieur supérieur $d_{DO}$ et un diamètre extérieur inférieur $d_{DU}$, qui sont respectivement supérieurs au diamètre intérieur libre $d_{SO}$ du siège de soupape supérieur (40a ; 104a), et le diamètre extérieur $d_{DU}$ de l'organe d'étanchéité inférieur (9b ; 109b) est supérieur au diamètre intérieur libre $d_{SO}$ du siège de soupape supérieur (4a ; 104a),
caractérisée en ce que

le corps de soupape (7 ; 107) est d'une seule pièce,
le diamètre extérieur $d_{DO}$ de l'organe d'étanchéité supérieur (9a ; 109a) est supérieur à 1,1 fois le diamètre extérieur $d_{TO}$ de l'opercule supérieur (6a: 106a), et le diamètre extérieur $d_{DU}$ de l'organe d'étanchéité inférieur (9b ; 109b) est supérieur à 1,1 fois le diamètre extérieur $d_{TU}$ de l'opercule de soupape inférieur (6b ; 106b), et
les organes d'étanchéité en élastomère (9a, 9b ; 109a, 109b) sont agencés à la face inférieure des deux opercules de soupape (6a, 6b ; 106a, 106b).

2. Soupape à double siège selon la revendication 1, caractérisée en ce que le diamètre extérieur $d_{DO}$ de l'organe d'étanchéité supérieur (9a; 109a) est supérieur ou égal à 1,5 fois le diamètre extérieur $d_{TO}$ de l'opercule supérieur (6a ; 106a), et en ce que le diamètre extérieur $d_{DU}$ de l'organe d'étanchéité inférieur (9b ; 109b) est supérieur ou égal à 1,5 fois le diamètre extérieur $d_{TU}$ de l'opercule inférieur (6b ; 106b).

3. Soupape à double siège selon l'une ou l'autre des revendications 1 et 2, caractérisée en ce que dans la position fermée de la soupape à double siège (1 ; 101) les surfaces d'étanchéité efficaces de l'opercule supérieur (6a ; 106a) et de l'opercule inférieur (6b ; 106b) sont égales.

4. Soupape à double siège selon l'une quelconque des revendications précédentes, caractérisée en ce que le siège de soupape supérieur et/ou le siège de soupape inférieur (4a, 4b ; 104a, 104b) est réalisé sous forme de tranchant avec des arêtes d'étanchéité (105a, 105b).

5. Soupape à double siège selon l'une quelconque des revendications précédentes, caractérisée en ce que le siège de soupape supérieur et/ou le siège de soupape inférieur (4a, 4b ; 104a, 104b) est réalisé avec une surface d'étanchéité plane (5a, 5b).

6. Soupape à double siège selon la revendication 5, caractérisée en ce que les organes d'étanchéité (9a, 9b) présentent chacun dans la région des surfaces d'étanchéité (5a, 5b) un bourrelet périphérique (12a, 12b) en saillie vers le bas.

7. Soupape à double siège selon l'une quelconque des revendications précédentes, caractérisée en ce que le diamètre intérieur libre $d_{SO}$ du siège de soupape supérieur (4a ; 104a) est égal au diamètre intérieur libre $d_{SU}$ du siège de soupape inférieur (4b; 104b).

8. Soupape à double siège selon la revendication 7, caractérisée en ce que les deux côtés des sièges de soupape (4 ; 104) sont réalisés avec une arête d'étanchéité (105a, 105b) et/ou une surface d'étanchéité (5a, 5b).

9. Soupape à double siège selon l'une quelconque des revendications précédentes, caractérisée en ce que les surfaces périphériques des organes d'étanchéité (9a, 9b ; 109a, 109b) s'étendent en forme conique (11a, 11b; 111a, 111b).

10. Soupape à double siège selon l'une quelconque des revendications précédentes, caractérisée en ce qu'une couche de séparation est réalisée entre le siège de soupape (4a, 4b : 104a, 104b) et les organes d'étanchéité (9a, 9b ; 109a, 109b).

11. Soupape à double siège selon la revendication 10, caractérisée en ce que la couche de séparation est réalisée par un traitement de surface des arêtes d'étanchéité (105a, 105b) ou des surfaces d'étanchéité (5a, 5b).

12. Soupape à double siège selon l'une quelconque des revendications précédentes, caractérisée en ce que les organes d'étanchéité en élastomère (9a, 9b ; 109a, 109b) sont collés ou vulcanisés sur les deux opercules de soupape (6a, 6b ; 106a, 106b).

Fig. 1

Fig. 2

Fig. 3